# EUROPEAN PATENT SPECIFICATION

(11) **EP 2 333 414 B1**
(45) Date of publication and mention of the grant of the patent: **10.04.2019**
(21) Application number: 09818995.4
(22) Date of filing: 08.10.2009
(51) Int. Cl.: F23K 5/00, F23N 5/18, F23N 5/24, G01F 3/22, F23N 1/00, F23N 5/20

(54) **GAS-BLAST CIRCUIT BREAKER**
DRUCKGASSCHALTER
DISJONCTEUR DE GAZ

(30) Priority: 08.10.2008 JP 2008261445
(43) Date of publication of application: 15.06.2011
(73) Proprietor: Panasonic Corporation, Kadoma-shi Osaka 571-8501 (JP)
(72) Inventor: OOTANI, Takuhisa, Chuo-ku, Osaka-shi Osaka 540-6207 (JP); UEKI, Kouichi, Chuo-ku, Osaka-shi Osaka 540-6207 (JP); IWAMOTO, Ryuji, Chuo-ku, Osaka-shi Osaka 540-6207 (JP); ASANO, Kazutaka, Chuo-ku, Osaka-shi Osaka 540-6207 (JP)
(74) Representative: SSM Sandmair
(86) International application number: PCT/JP2009/005253
(87) International publication number: WO 2010/041455

(56) References cited:
- EP-A1- 2 177 829
- WO-A1-2008/050490
- JP-A- 10 143 204
- JP-A- 61 289 227
- JP-A- 2003 302 274
- US-A- 4 866 633

## Description

### Technical Field

The present invention relates to an improvement in a function of monitoring a flow rate in a gas cutoff device.

### Background Art

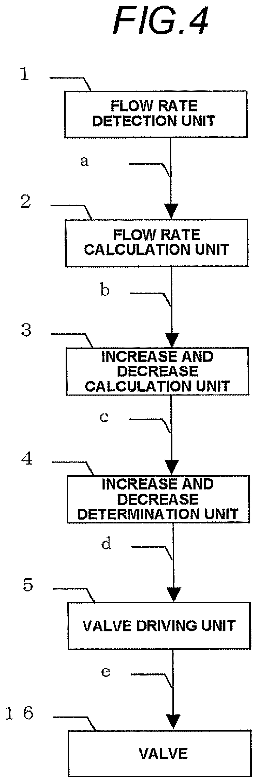

As shown in Fig. 4, a gas cutoff device of the related art includes a flow rate detection unit 1 that outputs a flow rate signal 'a' corresponding to a gas flow rate passing through a gas path; a flow rate calculation unit 2 that calculates a flow rate 'b' upon receiving the flow rate signal 'a' of the flow rate detection unit 1; an increase and decrease calculation unit 3 which, upon receiving the flow rate 'b' of the flow rate calculation unit 2, compares a value of the previously acquired flow rate 'b' to a value of the currently acquired flow rate 'b', where if there is no change, performs nothing, and, when there is a change, outputs a change amount 'c'; an increase and decrease determination unit 4 which, if the change amount 'c' output by the increase and decrease calculation unit 3 is an increase amount, determines the use of a new gas appliance is started, and adds and holds the change amount 'c', and if the change amount 'c' is a decrease amount, determines the use of a gas appliance is stopped and manages a plurality of change amounts 'c' while deleting the nearest held change amount 'c' out of those that are held, extracts a usable time calculated based on the greatest held change amount 'c' and starts the time measurement, and when the usable time elapses before acquiring the change amount 'c' of the increase and decrease calculation unit 3, outputs a valve driving signal 'd'; a valve driving unit 5 that outputs a closing signal 'e' upon receiving the valve driving signal 'd' of the increase and decrease determination unit 4; and a valve that closes the gas path upon receiving the closing signal 'e' of the valve driving unit 5 (for example, see Patent Literature 1).

### Citation List

### Patent Literature

Patent Literature 1: JP-A-61-289227
Patent Literature 2: EP 2 177 829 A1.

Patent literature 2, which represents state of the art in the sense of Article 54(3) EPC, discloses a gas cut-off device, comprising: a flow rate detection unit 10 configured to output a flow rate signal in response to a gas flow rate passing through a gas path, a flow rate calculation unit 11 configured to calculate a flow rate upon receiving the flow rate signal of the flow rate detection unit 10, an increase and decrease flow rate calculation unit 14 configured to compare a previously acquired flow rate (i.e. kept in the flow storage unit 13) with a currently acquired flow rate (i.e. calculated by the average flow computing unit 12), and, if there is a change, outputs a change amount, an increase and decrease determination unit 15 which manages a plurality of flow rate changes, an increase and decrease correction unit 17 (i.e. the flow change correction memory unit) configured to determine a corrected registered flow rate, a valve driving unit 21, and a valve (not shown, but referred to). The increase and decrease determination unit 15 receives from the increase and decrease correction unit 17 a corrected registered change amount, retains the corrected registered amount as a new change amount and generates through unit 2*1 a valve driving signal with the aid of an abnormality determination unit 20 and of an operating time correction unit 22.

### Summary of Invention

### Technical Problem

In the gas cutoff device of the related art, there is a description of an addition and a deletion of a plurality of held change amounts, but a correction of the change amount is not described. However, as background art, since the handling of the change amount is described, it is exemplified.

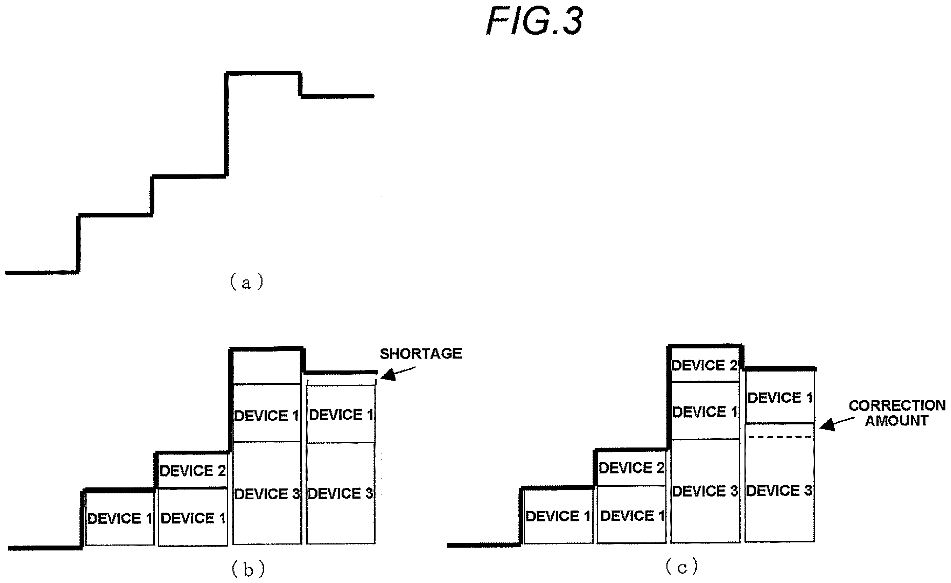

However, in the configuration of the related art, when the total use amount of the actually used gas is decreased, since the nearest change amount is deleted out of a plurality of changes amounts which the gas cutoff device holds, it is known that an error occurs between the total use amounts of gas actually used and the sum of the plurality of change amounts held in the gas cutoff device when the change amount is deleted. That is, Fig. 3 shows a total use amount of gas in which three appliances of "device 1" of appliance 1, "device 2" of appliance 2, and "device 3" of appliance 3 are used.

When "device 1" starts to be used, "device 2" starts to be used, and "device 3" starts to be used, in the order, and the total use amount of gas is decreased as shown by (a) in Fig. 3, although a case is satisfactory where the total use amount of gas is increased such as "device 1", "device 1" + "device 2", and "device 1" + "device 2" + "device 3" as shown by (b) in Fig. 3, when the total use amount of gas is decreased, since the near gas appliance is assumed to be "device 2", "shortage" appears.

In this manner, an error (in the present embodiment, shortage) may occur as a total use amount of gas decreases, and there is a possibility that the sum of the error increases. Furthermore, there is a case when an opposite pattern in which the actually decreased amount becomes larger, and a balance is kept. When the sum of the error becomes larger, since the sum of the plurality of change amounts held in the gas cutoff device becomes smaller, inevitably, the greatest change amount itself among them becomes a small value separated from the actual use amount of the gas appliance. Since the use amount and the usable time set for each type of gas appliance such as a hot water heater or a fan heater are in an inverse proportional relationship, the large gas use amount corresponds to a short time and the small gas use amount corresponds to a long time. Thus, when the usable time is extracted based on the small change amount separated from the actual gas appliance, it is known that the time up to closing the gas path is lengthened. For this reason, there is a possibility that the use of gas is unstable by being delayed further than the time of ordinarily closing the gas path.

The invention is made to solve the above problems, and an object thereof is to correct the gap between the actual gas total use amount and the sum of the plurality of change amounts held in the gas cutoff device by adding the shortage (the correction amount in the present example) to the greatest change amount ("device 3" in the example) held in the gas cutoff device as shown by (c) in Fig. 3, and by subtracting the shortage from the greatest change amount when the large and small relationship of the near change amount to be deleted and the decreased change amount is reversed.

### Solution to Problem

In order to solve the problem of the related art, a gas cutoff device of the invention includes: a flow rate detection unit that is configured to output a flow rate signal in response to a gas flow rate passing through a gas path; a flow rate calculation unit that is configured to calculate a flow rate upon receiving the flow rate signal of the flow rate detection unit; an increase and decrease calculation unit that is configured to compare a previously acquired flow rate with a currently acquired flow rate, and, if there is a change, outputs a change amount; an increase and decrease determination unit which is configured to manage a plurality of change amounts while adding and holding the change amount if the change amount is an increase amount, and deleting the nearest held change amount to the decrease amount if the change amount is a decrease amount, to manage a plurality of change amounts while deleting the nearest held change amount to the decrease amount, to output an increase and decrease processed signal and to extract a usable time based on the greatest held change amount, and when a using time reaches the usable time, output a valve driving signal; an increase and decrease correction unit which is configured, upon receiving the increase and decrease processed signal, to compare the sum of a plurality of change amounts held in the increase and decrease determination unit with the currently acquired flow rate, and if a flow rate difference is equal to or greater than a predetermined value, to output a corrected change amount obtained by adding or subtracting the calculated flow rate difference to or from the greatest change amount acquired from the increase and decrease determination unit; a valve driving unit that is configured to output a closing signal upon receiving the valve driving signal of the increase and decrease determination unit; and a valve that is configured to close the gas path upon receiving the closing signal of the valve driving unit, and in which, upon acquiring the corrected change amount, the increase and decrease determination unit deletes the greatest held change amount, holds the corrected change amount as a new change amount, then extracts the usable time based on the greatest held change amount, and outputs the valve driving signal when the using time reaches the usable time. As a result, the gas cutoff device can correct the gap between the total using amount of the actually used gas and the sum of a plurality of the change amounts held by the gas cutoff device.

### Advantageous Effects of Invention

The gas cutoff device according to the invention extracts the usable time of gas by the greatest change amount as used in the related art, and when a gap is generated between the total using amount of the actually used gas and the sum of the plurality of change amounts held in the gas cutoff device, the gas cutoff device can correct the difference therebetween, prevent the time up to the gas path becoming closed from being lengthened by the gap. Thus, both of convenience and safety can be promoted.

### Brief Description of Drawings

Fig. 1 is a functional block diagram of a gas cutoff device in a first embodiment of the invention.
Fig. 2 is a functional block diagram of a gas cutoff device in a second embodiment of the invention.
In Fig. 3, (a) to (c) are diagrams that show a use pattern of gas and a change amount in which the gas cutoff device is held.
Fig. 4 is a functional block diagram of a gas cutoff device of the related art.

### Description of Embodiments

According to the invention, there is provided a gas cutoff device which includes: a flow rate detection unit that is configured to output a flow rate signal in response to a gas flow rate passing through a gas path; a flow rate calculation unit that is configured to calculate a flow rate upon receiving the flow rate signal of the flow rate detection unit; an increase and decrease calculation unit that is configured to compare a previously acquired flow rate with a currently acquired flow rate, and, if there is a change, outputs a change amount; an increase and decrease determination unit which is configured to manage a plurality of change amounts while adding and holding the change amount if the change amount is an increase amount, and deleting the nearest held change amount to the decrease amount if the change amount is a decrease amount, to manage a plurality of change amounts while deleting the nearest held change amount to the decrease amount, to output an increase and decrease processed signal and to extract a usable time based on the greatest held change amount, and when a using time reaches the usable time, output a valve driving signal; an increase and decrease correction unit which is configured, upon receiving the increase and decrease processed signal, to compare the sum of a plurality of change amounts held in the increase and decrease determination unit with the currently acquired flow rate, and if a flow rate difference is equal to or greater than a predetermined value, to output a corrected change amount obtained by adding or subtracting the calculated flow rate difference to or from the greatest change amount acquired from the increase and decrease determination unit; a valve driving unit that is configured to output a closing signal upon receiving the valve driving signal of the increase and decrease determination unit; and a valve that is configured to close the gas path upon receiving the closing signal of the valve driving unit, and in which, upon acquiring the corrected change amount, the increase and decrease determination unit deletes the greatest held change amount, holds the corrected change amount as a new change amount, then extracts the usable time based on the greatest held change amount, and outputs the valve driving signal when the using time reaches the usable time. Thus, the increase and decrease correction unit can prevent the gap by obtaining the consistency between the flow rate of the flow rate calculation unit and the plurality of change amounts held in the increase and decrease determination unit.

According to an embodiment not covered by the invention, there is provided a gas cutoff device which includes: a flow rate detection unit that is configured to output a flow rate signal in response to a gas flow rate passing through a gas path; a flow rate calculation unit that is configured to calculate a flow rate upon receiving the flow rate signal of the flow rate detection unit; an increase and decrease calculation unit that is configured to compare a previously acquired flow rate with a currently acquired flow rate, and, if there is a change, output a change amount; an increase and decrease determination unit which is configured to manage a plurality of change amounts while adding and holding the change amount if the change amount is an increase amount, and deleting the nearest held change amount to the decrease amount if the change amount is a decrease amount, to manage a plurality of change amounts while deleting the nearest held change amount to the decrease amount, to extract a usable time based on the greatest held change amount, and when a using time reaches the usable time, to output a valve driving signal; a constant increase and decrease correction unit which is configured, upon receiving the change amount, to acquire and hold the flow rate of the flow rate calculation unit as a reference value, to compare a new flow rate acquired from the flow rate calculation unit to the reference value as the new flow rate is acquired, if a flow rate difference is equal to or greater than a predetermined value, to obtain a flow rate difference between the sum of the plurality of change amounts held in the increase and decrease determination unit and the currently obtained flow rate, and to output a corrected change amount obtained by adding or subtracting the flow rate difference to or from the greatest change amount acquired from the increase and decrease determination unit; a valve driving unit that is configured to output a closing signal upon receiving the valve driving signal of the increase and decrease determination unit; and a valve that is configured to close the gas path upon receiving the closing signal of the valve driving unit, wherein, upon acquiring the corrected change amount, the increase and decrease determination unit deletes the greatest held change amount, holds the corrected change amount as a new change amount, extracts the usable time based on the greatest held change amount, and outputs the valve driving signal when the using time reaches the usable time. Thus, the constant increase and decrease correction unit monitors the flow rate of the flow rate calculation unit and can prevent the gap.

Hereinafter, embodiments of the invention will be described with reference to the drawings. In addition, the invention is not limited to the embodiments.

### (First Embodiment)

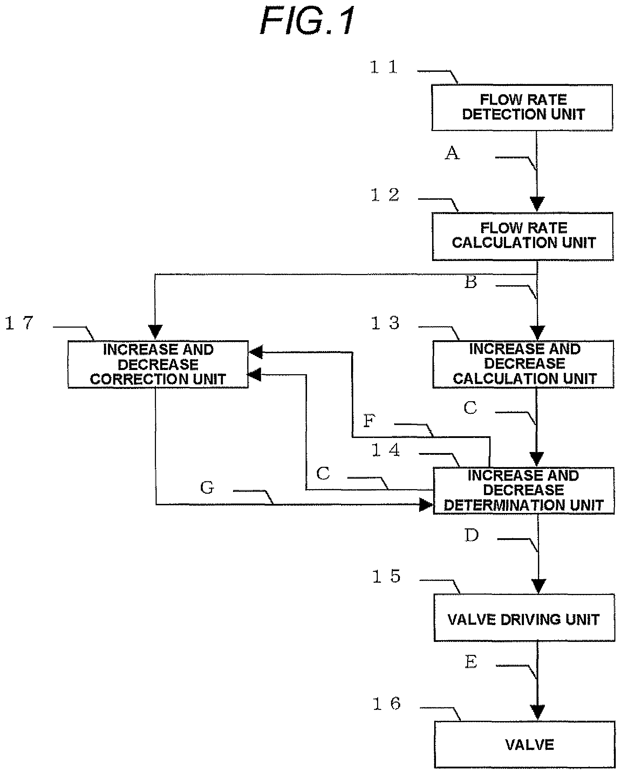

Fig. 1 shows a functional block diagram of a gas cutoff device according to the invention.

In Fig. 1, a flow rate detection unit 11 outputs a flow rate signal 'A' corresponding to a gas flow rate that passes through a gas path. The gas flow rate may be detected from a difference of a transmission time of an ultrasonic wave by attaching opposed ultrasonic sensors in the gas path. Alternatively, a route through which the gas flows in the gas path is created and the gas flow rate may be detected from the vibration which is generated when the gas flows through the route.

A flow rate calculation unit 12 calculates a flow rate 'B' upon receiving the flow rate signal 'A' of the flow rate detection unit 11.

An increase and decrease calculation unit 13 compares a value of the last obtained flow rate 'B' to the currently obtained flow rate 'B' upon receiving the flow rate 'B' of the flow rate calculation unit 12, where if there is no change, performs nothing, and if there is a change, outputs a change amount 'C'. The presence or absence of the change may be decided, for example, by a predetermined differential or more, and may be decided by a change rate.

An increase and decrease correction unit 17 acquires all a plurality of change amounts 'C' held in an increase and decrease determination unit 14, upon receiving an increase and decrease processed signal 'F' of the increase and decrease determination unit 14. The increase and decrease correction unit 17 compares the sum of the obtained change amounts 'C' to the flow rate 'B' of the flow rate calculation unit 12. If there is no difference of more than a predetermined value, the increase and decrease correction unit 17 performs nothing, while if there is difference of more than the predetermined value, the increase and decrease correction unit 17 adds or subtracts, and corrects the calculated difference (the correction amount) to the greatest change amount 'C' acquired from the increase and decrease determination unit 14, and outputs a corrected change amount 'G'.

Herein, a description will be provided using Fig. 3. When the total using amount of gas in (c) of Fig. 3 is reduced, that is, after "device 2" is stopped, the sum of the change amount 'C' becomes the sum of "device 1" and "device 3". Moreover, since "device 3" is greater than "device 1", the calculated difference (the correction amount) is added to or subtracted from "device 3" and "device 3 + the correction amount" is output as the corrected change amount 'G'.

In addition, although in the present embodiment the determination of "more than predetermined value" is decided by 100 L/h or more than 100 L/h, the determination of "more than predetermined value" restricts the reflection of the change of the minute gas using amount to the greatest change amount 'C', and when there is a need for a minute correction, the determination of "more than predetermined value" may not be performed.

If the change amount 'C' output from the increase and decrease calculation unit 13 is an increase amount, the increase and decrease determination unit 14 determines that the use of a new gas appliance is started, and adds and holds the change amount 'C'. If the change amount 'C' is a decrease amount, the increase and decrease determination unit 14 determines the use of the gas appliance is stopped, and manages the plurality of change amounts 'C' while deleting the nearest change amount 'C' to the decrease amount (for example, all of the held change amounts 'C' may be compared to the decrease amount, and the differential which is the smallest one may be selected) among the held changes amounts so as to output the increase and decrease processed signal 'F'. Further, when acquired the corrected change amount 'G' of the increase ad decrease correction unit, the increase and decrease determination unit 14 deletes the greatest held change amount 'C', and holds the corrected change amount 'G' as a new change amount 'C'. Then, the increase and decrease determination unit 14 extracts the usable time based on the greatest held change amount 'C' and starts the time measurement. When the usable time elapses before re-acquiring the change amount 'C' of the increase and decrease calculation unit 13 again, the increase and decrease determination unit 14 outputs a valve driving signal 'D'.

A valve driving unit 15 outputs a closing signal 'E' upon receiving the valve driving signal 'D' of the increase and decrease determination unit 14.

A valve 16 closes the gas path upon receiving the closing signal 'E' of the valve driving unit 15.

As mentioned above, in the present embodiment, the corrected change amount 'G' output from the increase and decrease correction unit 17 is held as a new change amount 'C' in the increase and decrease determination unit 14, and by obtaining the consistency between the flow rate 'B' of the flow rate calculation unit 12 and the sum of the plurality of change amounts 'C' held in the increase and decrease determination unit 14, the gap can be prevented.

### (Second Embodiment)

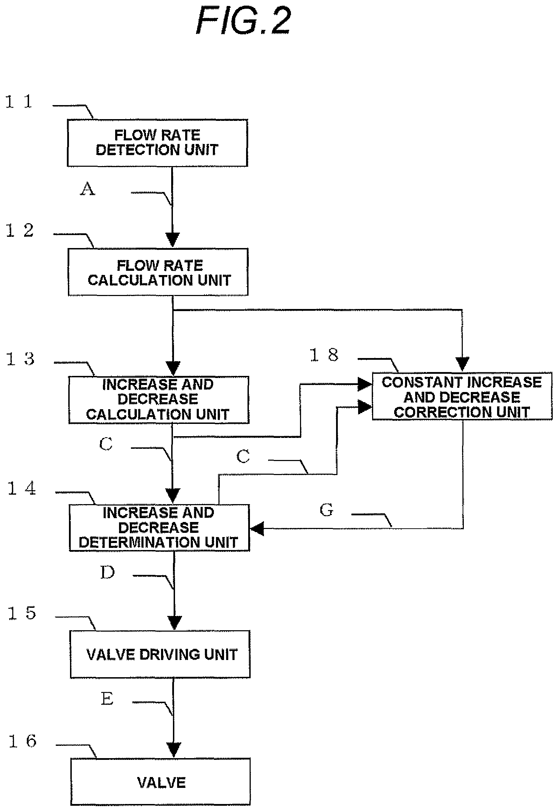

Fig. 2 shows a functional block diagram of a gas cutoff device in an embodiment not covered by the invention. Note that, since the components to which the reference numerals same as the first embodiment are assigned have the same functions, descriptions thereof will be omitted.

A constant increase and decrease correction unit 18 acquires and holds the flow rate 'B' of the flow rate calculation unit 12 as a reference value upon receiving the change amount 'C' of the increase and decrease calculation unit 13. The constant increase and decrease correction unit 18 compares a new flow rate 'B' to the reference value as it acquires the new flow rate 'B' of the flow rate calculation unit 12, and if the difference is not equal to or greater than a predetermined value, performs nothing, and if the difference is equal to or greater than the predetermined value, obtains all of the plurality of change amounts 'C' held in the increase and decrease determination unit 14. The constant increase and decrease correction unit 18 obtains a difference between the sum of the acquired change amounts 'C' and the flow rate 'B' of the flow rate calculation unit 12, and outputs the corrected change amount 'G' obtained by adding or subtracting the calculated difference (the correction amount) to the greatest change amount 'C' acquired from the increase and decrease determination unit 14.

Herein, a description will be provided using Fig. 3. In (c) of Fig. 3, the change amounts, which are acquired when a difference between the total using amount of gas and the reference value becomes more than a predetermined value (when the appliance 2 is stopped), correspond to "device 1" and "device 3". Herein, since "device 3" is large, as the corrected change amount 'G', "device 3 + the correction amount" is output.

In addition, herein, a case is supposed where, when the total using amount (= flow rate 'B') of gas is decreased, a difference between the total using amount of gas and the sum of the plurality of change amounts 'C' held in the gas cutoff device is not generated, and when thereafter the change cannot be detected by the increase and decrease calculation unit 13, the total using amount of gas is gradually decreased.

In addition, although in the present embodiment the determination of "more than predetermined value" is decided by 100 L/h or greater than 100 L/h, the determination of "more than predetermined value" restricts the reflection of the change of the minute gas using amount to the greatest change amount 'C', and when there is a need for a minute correction, the determination of "more than predetermined value" may not be performed.

Whereas the increase and decrease determination unit 14 acquires the corrected change amount 'G' from the increase and decrease correction unit 17 in the first embodiment, the increase and decrease determination unit 14 acquires the corrected change amount 'G' from the constant increase and decrease correction unit 18, but does not output the increase and decrease processed signal 'F'. Furthermore, when the usable time elapses before acquiring the change amount 'C' of the increase and decrease calculation unit 13 or the corrected change amount 'G' of the constant increase and decrease correction unit 18, the increase and decrease determination unit 14 outputs the valve driving signal 'D'.

As mentioned above, in the present embodiment, the corrected change amount 'G' output from the constant increase and decrease correction unit 18 is held as a new change amount 'C' in the increase and decrease determination unit 14, and by always obtaining the consistency between the flow rate 'B' of the flow rate calculation unit 12 and the sum of the plurality of change amounts 'C' held in the increase and decrease determination unit 14 by the increase and decrease correction unit 18, the gap can be prevented.

In the first and second embodiments, in a case where the total use amount of gas is greatly changed in the first embodiment, and in a case where the total using amount is not greatly changed in the second embodiment, it is possible to detect and correct the occurrence of a difference between the total using amount (= flow rate 'B') of gas and the sum of the plurality of change amounts 'C' held in the gas cutoff device, and the gap can be prevented.

By the correction, the greatest change amount 'C' is deleted and the corrected change amount 'G' is held as a new change amount 'C', whereby there is a possibility that the greatest change amount 'C' held in the gas cutoff device becomes larger than the maximum using amount of the gas appliance which is actually used. However, even if the greatest change amount 'C' becomes larger, since the time until the gas path is closed is shortened, the leaving on of the gas appliance can be stopped early, and thus, safety can be secured.

Although the invention has been described in detail or based on a specific embodiment, it will be apparent to those skilled in the art that various alterations and modifications can be added without departing from the scope of the invention.

### Industrial Applicability

As mentioned above, the gas cutoff device according to the invention can correct the occurrence of the gap between the actual gas total using amount and the sum of the plurality of change amounts held in the gas cutoff device in addition to estimating the use or non-use of gas appliance by the increase or decrease of the total using amount of gas of the related art, and it is possible to secure the safety and improve the convenience. If the gas is replaced with the electricity, water or the like, it can be applied to an electricity meter, a water supply meter or the like.

### Reference Signs List

11 flow rate detection unit
12 flow rate calculation unit
13 increase and decrease calculation unit
14 increase and decrease determination unit
15 valve driving unit
16 valve
17 increase and decrease unit
18 constant increase and decrease correction unit

## Claims

1. A gas cutoff device, comprising:
a flow rate detection unit (11) that is configured to output a flow rate signal (A) in response to a gas flow rate passing through a gas path;
a flow rate calculation unit (12) that is configured to calculate a flow rate (B) upon receiving the flow rate signal (A) from the flow rate detection unit (11);
an increase and decrease calculation unit (13) that is configured to compare a previously acquired flow rate (B) with a currently acquired flow rate (B), and, if there is a change, outputs a change amount (C);
an increase and decrease determination unit (14) which is configured to manage a plurality of change amounts (C) output by the increase and decrease calculation unit (13) while adding and holding the change amount (C) if the change amount (C) is an increase amount, and deleting the nearest held change amount (C) to the decrease amount if the change amount (C) is a decrease amount, to output an increase and decrease processed signal (F) and to extract a usable time of gas based on the greatest held change amount (C), and when a time of using gas reaches the usable time, output a valve driving signal (D);
a valve driving unit (15) that is configured to output a closing signal (E) upon receiving the valve driving signal (D) from the increase and decrease determination unit (14);
a valve (16) that is configured to close the gas path upon receiving the closing signal (E) from the valve driving unit (15); and
an increase and decrease correction unit (17) which is configured, upon receiving the increase and decrease processed signal (F), to compare the sum of the plurality of change amounts (C) held in the increase and decrease determination unit (14) with the currently acquired flow rate (B), and if a flow rate difference is equal to or greater than a predetermined value, to output a corrected change amount (G) obtained by adding or subtracting the calculated flow rate difference to or from the greatest change amount (C) acquired from the increase and decrease determination unit (14), wherein
upon acquiring the corrected change amount (G), the increase and decrease determination unit (14) deletes the greatest held change amount (C), holds the corrected change amount (G) as a new change amount (C), then extracts the usable time of gas based on the new greatest held change amount (C), and outputs the valve driving signal (D) when the time using gas reaches the usable time.

## Patentansprüche

1. Gasabsperrvorrichtung, umfassend:
eine Durchflussrate-Erfassungseinheit (11), die konfiguriert ist, ein Durchflussratensignal (A) als Reaktion auf eine Gasdurchflussrate, die durch einen Gasweg verläuft, auszugeben;
eine Durchflussrate-Berechnungseinheit (12), die konfiguriert ist, eine Durchflussrate (B) bei Empfang des Durchflussratensignals (A) von der Durchflussrate-Erfassungseinheit (11) zu berechnen;
eine Zunahme-Abnahme-Berechnungseinheit (13), die konfiguriert ist, eine zuvor ermittelte Durchflussrate (B) mit einer aktuell ermittelten Durchflussrate (B) zu vergleichen und wenn eine Änderung vorliegt, einen Änderungsbetrag (C) auszugeben;
eine Zunahme-Abnahme-Bestimmungseinheit (14), die konfiguriert ist, eine Vielzahl von Änderungsbeträgen (C) zu verwalten, die durch die Zunahme-Abnahme-Berechnungseinheit (13) ausgegeben werden, während der Änderungsbetrag (C) hinzugefügt und gehalten wird, wenn der Änderungsbetrag (C) ein Zunahmebetrag ist, und der am nächsten zu dem Abnahmebetrag gehaltene Änderungsbetrag (C) gelöscht wird, wenn der Änderungsbetrag (C) ein Abnahmebetrag ist, um ein verarbeitetes Zunahme-Abnahme-Signal (F) auszugeben und eine Nutzzeit von Gas auf Grundlage des größten gehaltenen Änderungsbetrags (C) zu extrahieren, und wenn eine Zeit der Nutzung von Gas die Nutzzeit erreicht, ein Ventilantriebssignal (D) auszugeben;
eine Ventilantriebseinheit (15), die konfiguriert ist, ein Schließsignal (E) bei Empfang des Ventilantriebssignals (D) von der Zunahme-Abnahme-Bestimmungseinheit (14) auszugeben;
ein Ventil (16), das konfiguriert ist, den Gasweg bei Empfang des Schließsignals (E) von der Ventilantriebseinheit (15) zu schließen; und
eine Zunahme-Abnahme-Korrektureinheit (17), die konfiguriert ist, bei Empfang des verarbeiteten Zunahme-Abnahme-Signals (F) die Summe der Vielzahl von Änderungsbeträgen (C), die in der Zunahme-Abnahme-Bestimmungseinheit (14) gehalten werden, mit der aktuell ermittelten Durchflussrate (B) zu vergleichen und wenn eine Durchflussratendifferenz gleich oder größer als ein vorbestimmter Wert ist, einen korrigierten Änderungsbetrag (G) auszugeben, der durch Addieren oder Subtrahieren der berechneten Durchflussratendifferenz mit oder von dem größten Änderungsbetrag (C) erhalten wird, der von der Zunahme-Abnahme-Bestimmungseinheit (14) ermittelt wird, wobei
bei Ermittlung des korrigierten Änderungsbetrags (G) die Zunahme-Abnahme-Bestimmungseinheit (14) den größten gehaltenen Änderungsbetrag (C) löscht, den korrigierten Änderungsbetrag (G) als einen neuen Änderungsbetrag (C) hält, dann die Nutzzeit von Gas auf Grundlage des neuen größten gehaltenen Änderungsbetrags (C) extrahiert und das Ventilantriebssignal (D) ausgibt, wenn die Zeit der Nutzung von Gas die Nutzzeit erreicht.

## Revendications

1. Dispositif de coupure de gaz, comprenant :
une unité de détection de débit (11) qui est configurée pour produire en sortie un signal de débit (A) en réponse à un débit de gaz passant à travers un chemin de gaz ;
une unité de calcul de débit (12) qui est configurée pour calculer un débit (B) lors de la réception du signal de débit (A) à partir de l'unité de détection de débit (11) ;
une unité de calcul d'augmentation et de réduction (13) qui est configurée pour comparer un débit acquis auparavant (B) à un débit acquis actuellement (B), et, s'il y a un changement, produire en sortie une quantité de changement (C) ;
une unité de détermination d'augmentation et de réduction (14) qui est configurée pour gérer une pluralité de quantités de changement (C) produites en sortie par l'unité de calcul d'augmentation et de réduction (13) tout en additionnant et maintenant la quantité de changement (C) si la quantité de changement (C) est une quantité d'augmentation, et en supprimer la quantité de changement la plus proche maintenue (C) pour la quantité de réduction si la quantité de changement (C) est une quantité de réduction, pour produire en sortie un signal traité d'augmentation et de réduction (F) et pour extraire un temps utilisable de gaz sur la base de la quantité de changement la plus grande maintenue (C), et lorsqu'un temps d'utilisation de gaz atteint le temps utilisable, produire en sortie un signal d'entraînement de soupape (D) ;
une unité d'entraînement de soupape (15) qui est configurée pour produire en sortie un signal de fermeture (E) lors de la réception du signal d'entraînement de soupape (D) à partir de l'unité de détermination d'augmentation et de réduction (14) ;
une soupape (16) qui est configurée pour fermer le chemin de gaz lors de la réception du signal de fermeture (E) à partir de l'unité d'entraînement de soupape (15) ; et
une unité de correction d'augmentation et de réduction (17) qui est configurée, lors de la réception du signal traité d'augmentation et de réduction (F), pour comparer la somme de la pluralité de quantités de changement (C) maintenues dans l'unité de détermination d'augmentation et de réduction (14) au débit acquis actuellement (B), et, si une différence de débit est égale ou supérieure à une valeur prédéterminée, pour produire en sortie une quantité de changement corrigée (G) obtenue en additionnant ou soustrayant la différence de débit calculée à, ou à partir de, la quantité de changement la plus grande (C) acquise à partir de l'unité de détermination d'augmentation et de réduction (14), dans lequel
lors de l'acquisition de la quantité de changement corrigée (G), l'unité de détermination d'augmentation et de réduction (14) supprime la quantité de changement la plus grande maintenue (C), maintient la quantité de changement corrigée (G) en tant que nouvelle quantité de changement (C), puis extrait le temps utilisable de gaz sur la base de la nouvelle quantité de changement la plus grande maintenue (C), et produit en sortie le signal d'entraînement de soupape (D) lorsque le temps d'utilisation de gaz atteint le temps utilisable.
